(19) Europäisches Patentamt
European Patent Office
Office européen des brevets

(11) **EP 1 311 565 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(21) Anmeldenummer: **01974173.5**

(22) Anmeldetag: **11.08.2001**

(51) Int Cl.[7]: **C08F 10/10**, C08F 6/02, C08F 4/14

(86) Internationale Anmeldenummer:
**PCT/EP2001/009318**

(87) Internationale Veröffentlichungsnummer:
**WO 2002/014385 (21.02.2002 Gazette 2002/08)**

(54) **VERFAHREN ZUR HERSTELLUNG VON POLYISOBUTENEN**
METHOD FOR PRODUCING POLYISOBUTENES
PROCEDE DE FABRICATION DE POLYISOBUTENES

(84) Benannte Vertragsstaaten:
**AT BE CH CY DE DK ES FI FR GB GR IE IT LI LU MC NL PT SE TR**

(30) Priorität: **16.08.2000 DE 10040618**

(43) Veröffentlichungstag der Anmeldung:
**21.05.2003 Patentblatt 2003/21**

(73) Patentinhaber: **BASF AKTIENGESELLSCHAFT**
**67056 Ludwigshafen (DE)**

(72) Erfinder:
- **WETTLING, Thomas**
  **67117 Limburgerhof (DE)**
- **BORCHERS, Dirk**
  **B-2950 Kapellen (BE)**
- **VERRELST, Wim**
  **B-2650 Edegem (BE)**
- **RATH, Hans, Peter**
  **67269 Grünstadt (DE)**

(56) Entgegenhaltungen:
**DE-A- 2 702 604**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 311 565 B1

## Beschreibung

Die vorliegende Erfindung betrifft ein Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators aufhebt.

Hochmolekulare Polyisobutene mit Molekulargewichten bis zu mehreren 100 000 Dalton sind seit langem bekannt, und ihre Herstellung wird beispielsweise in H. Güterbock: Polyisobutylen und Mischpolymerisate, S. 77 bis 104, Springer Verlag, Berlin 1959, beschrieben. Von diesen herkömmlichen Polyisobutenen sind die sogenannten hochreaktiven Polyisobutene zu unterscheiden, welche in der Regel mittlere Molekulargewichte von 500 bis 50000 Dalton und einen hohen Gehalt an endständigen Doppelbindungen, sogenannten Vinylidengruppierungen, von vorzugsweise deutlich über 60 mol-% haben.

Solche hochreaktive Polyisobutene werden als Zwischenprodukte für die Herstellung von Additiven für Schmier- und Kraftstoffe verwendet, wie sie beispielsweise in der DE-A 27 02 604 beschrieben sind. Zur Herstellung dieser Additive werden zunächst durch Reaktion der endständigen Doppelbindungen des Polyisobutens mit Maleinsäureanhydrid Polyisobuten-Maleinsäureanhydrid-Addukte, insbesondere Polyisobutenyl-Bernsteinsäureanhydride erzeugt, welche anschließend mit bestimmten Aminen zum fertigen Additiv umgesetzt werden. Der Anteil an endständigen Vinylidengruppierungen im Molekül ist eines der wichtigsten Qualitätskriterien für diesen Polyisobutentypus, da bei der Adduktbildung mit Maleinsäureanhydrid hauptsächlich die endständigen Vinylidengruppierungen reagieren, wohingegen die weiter im Inneren der Makromoleküle liegenden Doppelbindungen je nach ihrer Lage im Makromolekül ohne die Zugabe von Halogenen zu keinem oder zu einem deutlich geringeren Umsatz führen.

Wie man sich das Zustandekommen der endständigen Vinylidengruppierungen und die Isomerisierung der endständigen Doppelbindungen in den Isobutenmakromolekülen zu internen Doppelbindungen vorzustellen hat, kann etwa dem Artikel von Puskas et al., J. Polymer Sci.: Symposium No. 56, 191 (1976) oder der EP-A 628 575 entnommen werden. Die dabei ablaufenden Protonierungen, Deprotonierungen und Umlagerungen sind Gleichgewichtsreaktionen, bei denen die Ausbildung höher alkylsubstituierter Kationen thermodynamisch begünstigt ist. Die genannten Reaktionen werden in der Regel durch Säurespuren, insbesondere durch den üblicherweise Lewis-sauren Katalysator der Polymerisation selbst gefördert.

Ein weiteres Qualitätskriterium für Polyisobutene mit dem genannten Verwendungszweck ist deren mittleres Molekulargewicht ($M_N$).

Auch die Molekulargewichtsverteilung (Dispersität, D) der Polyisobutenmakromoleküle ist für den genannten Zweck ein Qualitätskriterium, denn je breiter sie ist, d.h., je größer die Streuung der Molekulargewichte der Polyisobutenmakromoleküle ist, umso weniger sind die Produkte häufig auf die gewünschte Problemlösung zugeschnitten.

Der Fachmann kennt bereits eine Reihe von Verfahren zur Herstellung von reaktiven Polyisobutenen aus Isobuten mit mittleren Molekulargewichten und Dispersitäten, die den genannten Anforderungen genügen und bei denen man Bortrifluorid als Katalysator verwendet.

Bortrifluorid setzt man dabei überwiegend in Form von Donor-Komplexen, insbesondere mit Wasser, Alkoholen, Phenolen, Carbonsäuren, Carbonsäureanhydriden, Fluorwasserstoff, Ethern oder Gemischen dieser Verbindungen ein. Bortrifluorid ist dabei als solches oder in Form der genannten Komplexe ein selbst bei tiefen Temperaturen ausgesprochen wirksamer Katalysator (vgl. z.B. DE-A 27 02 604, EP-A 145 235 oder EP-A 322 241).

Will man daher die durch Bortrifluorid katalysierte Umsetzung des Isobutens abbrechen, nachdem sich ein definierter Umsatz und/oder eine definierte Selektivität hinsichtlich der polymeren Produkte eingestellt hat, so muss man das Bortrifluorid in der Regel schnell und vollständig desaktivieren. Diese Desaktivierung besteht zumeist darin, dass man das Bortrifluorid mit flüssigen oder mit im Reaktionsmedium löslichen Stoffen zersetzt oder derart in andere Donorkomplexe überführt, dass es dem Reaktionsgeschehen praktisch vollständig entzogen ist.

Für eine solche komplexierende Desaktivierung des Bortrifluorids mit organisch-chemischen Desaktivatoren in flüssiger Phase kommen im Stand der Technik beispielsweise Alkohole und Acetonitril zum Einsatz (vgl. z.B. DE-A 43 06 384, EP-A 145 235).

Gemeinsam ist den bekannten Methoden zur Desaktivierung des Bortrifluorids, dass sie die Beseitigung oder Aufarbeitung großer Mengen an Flüssigkeiten erforderlich machen, die mit Bortrifluorid, seinen Abbauprodukten und/oder organischen Verbindungen befrachtet sind. Bei der Verwendung von Alkoholen für die Desaktivierung kann es zudem durch Reaktion mit dem Bortrifluorid zur Bildung von korrosivem Flourwasserstoff kommen, was die Verwendung von hochwertigen und kostspieligen Materialien bei der Auslegung der verwendeten Apparaturen erforderlich macht.

Angesichts dieser Sachlage wurden bereits Problemlösungen mit festen Desaktivatoren für das Bortrifluorid entwickelt.

Die US-A 4,384,162 schlägt hierzu vor, der Reaktionslösung das Bortrifluorid mittels festem Polyvinylalkohol zu entziehen. Das Verfahren hat jedoch den Nachteil, dass es den Anforderungen für die Polymerisation von Isobuten

nicht genügt, weil das Bortrifluorid trotz der Adsorption auf dem Polyvinylalkohol seine Aktivität teilweise beibehält und infolge dessen im Nachhinein noch unerwünschte Oligomere gebildet werden können.

Aus der US-A 4,433,197 ist bekannt, zu dem gleichen Zweck Silicagel einzusetzen. Jedoch ist auch diese Desaktivierung nicht hinreichend vollständig. Die US-A 4,213,001 lehrt sogar die Verwendung von Bortrifluorid/Silicagel als Katalysator für die Oligomerisierung von 1-Olefinen, was anzeigt, dass das Bortrifluorid auch noch nach der Adsorption katalytisch aktiv ist.

In der älteren deutschen Anmeldung mit den Aktenzeichen 100 35 298.7 ist zu diesem Zweck bereits die Verwendung eines Desaktivators mit Bortrifluorid bindenden primären, sekundären, tertiären und/oder quarternären Stickstoffatome vorgeschlagen worden, der im Reaktionsgemisch unlöslich ist. Diese Desaktivatoren sind jedoch nicht immer gut verfügbar.

Der vorliegenden Erfindung lag daher die Aufgabe zugrunde, ein Verfahren für die Herstellung von hochreaktivem Polyisobuten aus Isobuten in Gegenwart von Bortrifluorid als Katalysator bereitzustellen, das sich eines gut verfügbaren und dabei kostengünstigen festen Desaktivators für das Bortrifluorid bedient, welcher das Bortrifluorid wirksamer als die bekannten derartigen Desaktivatoren dem Reaktionsgeschehen entzieht.

Diese Aufgabe wird gelöst durch ein Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators teilweise oder vollständig aufhebt, welches dadurch gekennzeichnet ist, dass man als festen Desaktivator eine anorganische, wasserfreie oder wasserhaltige Sauerstoffverbindung des Aluminiums verwendet, welche im Reaktionsgemisch unlöslich ist.

Sofern nicht ausdrücklich anders angegeben, sind im Folgenden mit "Desaktivatoren" die erfindungsgemäß verwendeten anorganischen (wasserfreien oder wasserhaltigen) Sauerstoffverbindungen des Aluminiums gemeint.

Unter endständigen Vinylidengruppierungen oder endständigen Doppelbindungen werden hierin solche Doppelbindungen verstanden, deren Lage im Polyisobutenmakromolekül durch die allgemeine Formel I

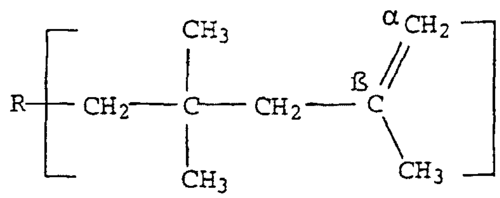

I

beschrieben wird, in welcher R für den übrigen Teil des Polyisobutylenmakromoleküls steht. Die Art und der Anteil der vorhandenen Doppelbindungen kann mit Hilfe der $^{13}C$-NMR-Spektroskopie bestimmt werden, wobei die beiden in der Formel I mit $\alpha$ und $\beta$ markierten Kohlenstoffatome der endständigen Doppelbindung im $^{13}C$-NMR-Spektrum durch ihre Signale bei der chemischen Verschiebung von 114,4 bzw. 143,6 relativ zu Tetramethylsilan identifizierbar sind. Der Anteil der endständigen Doppelbindungen bezüglich anderer Arten von Doppelbindungen wird ermittelt, indem man die Peakflächen der einzelnen Olefinsignale jeweils ins Verhältnis setzt zum Gesamtflächenintegral der Olefinsignale.

Die mit dem erfindungsgemäßen Verfahren erhältlichen hochreaktiven Polyisobutene weisen im Allgemeinen deutlich über 60, vorzugsweise von 75 bis 100 und vor allem von 80 bis 95 mol-% Vinylidengruppierungen auf.

Als mittleres Molekulargewicht wird hierin das Zahlenmittel $M_N$ des Molekulargewichts bezeichnet, das beispielsweise mit Hilfe der Gelpermeationschromatographie, durch Ozonolyse oder mittels Dampfdruckosmometrie bestimmt werden kann.

Die mit dem erfindungsgemäßen Verfahren erhältlichen hochreaktiven Isobutene weisen im Allgemeinen mittlere Molekulargewichte von 300 bis 50000, vorzugsweise von 500 bis 30000 und insbesondere von 500 bis 25000 Dalton auf.

Zur Herstellung hochreaktiver Polyisobutene aus Isobuten in Gegenwart von Bortrifluorid wird normalerweise entweder die benötigte Menge an vorgebildeter Bortrifluorid-Komplex-Lösung oder -Suspension im Isobuten verteilt oder es wird alternativ der Katalysator in situ erzeugt, indem man gasförmiges Bortrifluorid in eine Mischung aus Isobuten und dem Komplexbildner für das Bortrifluorid einleitet. Das katalytisch aktive System aus Bortrifluorid und dem Komplexbildner, das auf einem der genannten Wege entsteht, wird im Folgenden als "Katalysatorsystem" bezeichnet.

Im Sinne des erfindungsgemäßen Verfahrens eignen sind als Komplexbildner für das Bortrifluorid Alkohole, vorzugsweise Methanol und Isopropanol (vgl. die EP-A 628 575) sowie tertiäre Ether.

Üblicherweise wird das Katalysatorsystem in Mengen von 0,05 bis 1 Gew.-%, bezogen auf das Gewicht des eingesetzten Isobutens verwendet. Die Bruttoreaktionsgeschwindigkeit ist dabei in der Regel von der eingesetzten Menge des Katalysatorsystems abhängig, vor allem aber vom Molverhältnis des eingesetzten Katalysatorsystems.

Als Isobuten-haltiges Ausgangsmaterial (im Folgenden "Isobuten-Feedstock" genannt) können in dem der Desaktivierung des Bortrifluorids vorangehenden Syntheseschritt reines Isobuten aber auch Gemische von Isobuten mit anderen Kohlenwasserstoffen eingesetzt werden, wobei der Isobutengehalt derartiger Gemische zweckmäßigerweise nicht unter 5 Gew.-% betragen sollte. Vorzugsweise werden Kohlenwasserstoffgemische mit hohem Isobutengehalt und einem möglichst geringen Butadiengehalt verwendet, beispielsweise (i) Raffinat I, (ii) ein teilhydrierter $C_4$-Strom aus einem Steamcrakker, (iii) ein $C_4$-Strom aus einer Isobutan-Dehydrierung oder (iv) ein $C_4$-Strom aus einer Raffinerie, beispielsweise einer FCC-Anlage.

Der Isobuten-Feedstock kann in Gegenwart des Katalysatorsystems in einem oder mehreren inerten Lösungsmitteln zum Polyisobuten umgesetzt werden. Geeignete Lösungsmittel, einzeln oder in Gemischen untereinander, sind gesättigte Kohlenwasserstoffe, beispielsweise n-Butan, n-Pentan, Cyclopentan, n-Hexan, Methylcyclopentan, Isooctan oder Methylcyclohexan, ungesättigte, unter den Reaktionsbedingungen unreaktive Kohlenwasserstoffe wie 1-Buten, cis-2-Buten oder trans-2-Buten, einzeln oder im Gemisch, wie es etwa in Raffinat II vorliegt, halogenierte Kohlenwasserstoffe wie Methylenchlorid, Chloroform und sonstige Kohlenstoffhalogenverbindungen mit geeigneten Schmelz- und Siedepunkten.

Der Isobuten-Feedstock kann geringe Mengen an Verunreinigungen wie Wasser, Carbonsäuren oder Mineralsäuren enthalten, ohne dass es zu kritischen Ausbeute- oder Selektivitätsrückgängen bei der Polymerisation kommt. Es ist aber zweckdienlich, eine Anreicherung dieser Verunreinigungen im Reaktor zu vermeiden, indem man solche Schadstoffe beispielsweise mittels Adsorption an feste Adsorbentien wie Aktivkohle, Molekularsiebe oder Ionenaustauscher aus dem Isobuten-Feedstock entfernt.

Die Polymerisation des Isobutens kann diskontinuierlich, halbkontinuierlich oder kontinuierlich durchgeführt werden. Dazu kann in an sich bekannten Reaktoren wie Rohrreaktoren, Rohrbündelreaktoren oder Rührkesseln gearbeitet werden. Bevorzugt wird das Herstellverfahren in einem Schlaufenreaktor, also einem Rohr- oder Rohrbündelreaktor mit stetigem Umlauf des Reaktionsgutes, durchgeführt, wobei in der Regel das Volumenverhältnis von Zulauf zu Umlauf zwischen 1 : 1 und 1 : 1000, vorzugsweise zwischen 1 : 50 und 1 : 200 variieren kann. Es versteht sich von selbst, dass die Zulaufmenge der Menge des Reaktionsaustrages entspricht, sobald die Polymerisationsreaktion einen Gleichgewichtszustand erreicht hat.

Es ist zweckmäßig, sowohl beim Einleiten von vorgeformten Katalysatorkomplexen in den Reaktor als auch bei deren in situ-Darstellung im Reaktor für eine gute Durchmischung aller Reaktionspartner zu sorgen, denn hohe lokale und stationäre Katalysatorkonzentrationen im Reaktor können Anlaß zu unerwünschten Doppelbindungsverschiebungen geben. Eine gute Durchmischung erreicht man durch geeignete Einbauten wie Umlenkbleche oder durch angepasste Rohrquerschnitte, die bei geeigneter Strömungsgeschwindigkeit zu einer wirksamen, zweckdienlichen turbulenten Strömung des Reaktionsgutes im Reaktor führen.

Die Verweilzeit des Isobutens im Reaktor kann 5 Sekunden bis mehrere Stunden betragen. Vorzugsweise wird eine Verweilzeit von 1 bis 60 und besonders bevorzugt von 2 bis 30 Minuten gewählt.

Die Polymerisation wird zumeist bei Temperaturen unterhalb 0°C durchgeführt. Obwohl Isobuten noch bei wesentlich tieferen Temperaturen erfolgreich mittels des Katalysatorsystems zu hochreaktivem Polyisobuten polymerisiert werden kann, wird vorzugsweise bei Temperaturen zwischen 0 und -60, insbesondere zwischen 0 und -30 und besonders bevorzugt zwischen -5 und -20°C gearbeitet.

Vorteilhafterweise wird die Polymerisationsreaktion unter isothermen Bedingungen und im Falle einer kontinuierlichen Reaktionsführung, unter Einstellung einer konstanten, stationären Isobutenkonzentration im Reaktionsmedium betrieben. Die stationäre Isobutenkonzentration kann im Prinzip beliebig gewählt werden. Zweckmäßigerweise wird in der Regel eine Isobutenkonzentration von 0,2 bis 50 und vorzugsweise von 0,2 bis 10 Gew.-%, bezogen auf die gesamte Polymerisationsmischung, eingestellt.

Im Allgemeinen wird die Polymerisation unter Atmosphärendruck oder einem gegenüber dem Atmosphärendruck leicht erhöhten Druck ausgeführt. Die Anwendung eines erhöhten Drucks, insbesondere das Arbeiten unter dem Eigendruck des Reaktionssystems (bei Druckhaltung) kann unter verfahrenstechnischen Gesichtspunkten im Hinblick auf nachfolgende Verfahrensstufen vorteilhaft sein, sie ist jedoch für das Resultat der Polymerisation in der Regel unerheblich.

Da die Polymerisationsreaktion exotherm verläuft, wird die entstandene Wärme in der Regel mit Hilfe einer Kühlvorrichtung, die beispielsweise mit flüssigem Ammoniak als Kühlmittel betrieben werden kann, abgeführt. Eine andere Möglichkeit der Wärmeabfuhr ist die Siedekühlung, bei der freiwerdende Wärme durch Verdampfen des Isobutens, anderer leicht flüchtiger Bestandteile des Isobuten-Feedstocks und/oder des gegebenenfalls leichtflüchtigen Lösungsmittels, welches Ethylen, Ethan, Propan oder Butan sein kann, entzogen wird, wodurch die Temperatur konstant bleibt.

Der Isobutenumsatz kann prinzipiell beliebig eingestellt werden. Es versteht sich aber von selbst, dass die Wirtschaftlichkeit des Verfahrens bei sehr niedrigen Isobutenumsätzen in Frage gestellt ist, wohingegen bei sehr hohen Isobutenumsätzen von mehr als 99 % die Gefahr von unerwünschten Nebenreaktionen, beispielsweise von Doppelbindungsverschiebungen und vor allem der Bildung unerwünschter Oligomere, immer größer wird. In der Regel liegt

der Isobutenumsatz aus diesen Gründen zwischen 20 und 99,5 und vorzugsweise zwischen 90 und 99 %.

Im Austrag aus dem Reaktor (im Folgenden kurz "Austrag" genannt) liegt in der Regel der größte Teil des eingesetzten Bortrifluorids in freier Form oder als Katalysatorsystem, also als Komplex mit dem ursprünglich zugesetzten Komplexbildner vor. Es ist jedoch nicht auszuschließen, dass eine Umsetzung des Bortrifluorids mit anderen Bestandteilen des Reaktionsgemisches stattgefunden hat, etwa, bei Verwendung von Isopropanol als Komplexbildner, zu einem Isopropylboran. Wegen des normalerweise geringen Ausmaßes solcher Nebenreaktionen sollen diese jedoch hierin nicht weiter in Betracht gezogen werden. Vielmehr soll der Einfachheit halber und in guter Annäherung an die tatsächlichen Gegebenheiten davon ausgegangen werden, dass das gesamte eingesetzte Bortrifluorid zum Zeitpunkt der erfindungsgemäßen Desaktivierung noch als solches intakt ist.

Zum erfindungsgemäßen Desaktivieren des Bortrifluorids wird der Austrag mit dem Desaktivator behandelt.

Diese Desaktivierung kann grundsätzlich diskontinuierlich, halbkontinuierlich oder kontinuierlich durchgeführt werden. Wird die Polymerisation des Isobutens mit Bortrifluorid kontinuierlich durchgeführt, so wird das Bortrifluorid im Austrag vorzugsweise kontinuierlich mit dem Desaktivator desaktiviert.

Als Desaktivatoren eignen sich anorganische Sauerstoffverbindungen des Aluminiums, die in der Natur vorkommen oder solche, die künstlich hergestellt wurden (vgl. etwa Holleman-Wiberg, Lehrbuch der Anorganischen Chemie, 81.-90. Auflage, Walter de Gruyter Verlag, Berlin 1976, Seiten 647-650: "Sauerstoffverbindungen des Aluminiums").

Weiterhin eignen sich als Desaktivatoren Gemische derartiger anorganischer Sauerstoffverbindungen untereinander sowie Gemische derartiger Sauerstoffverbindungen mit anderen, unter den Bedingungen der Desaktivierung inerten Stoffen, wobei der Anteil der anorganischen Sauerstoffverbindung vorzugsweise mehr als 50 und vor allem mehr als 80 % am Gesamtgewicht eines solchen Gemisch mit inerten Stoffen beträgt.

Vorzugsweise verwendet man als anorganische Sauerstoffverbindungen des Aluminiums die Oxide und hydratisierten Oxide des Aluminiums. Da die stöchiometrische Zusammensetzung gemäß der Formel "$Al_2O_3$" eine thermodynamisch besonders bevorzugte Zusammensetzung im System Aluminium/Sauerstoff darstellt, wird diese Formel üblicherweise schlechthin für Aluminiumoxide verwendet. Dabei ist jedoch auch bekannt, dass Aluminiumoxide der Stöchiometrie "$Al_2O_3$" normalerweise aus Aluminiumhydraten "$Al(H_2O)_n^{3+}$" entstehen, in denen n für eine ganze Zahl steht, die die Anzahl der Wassermoleküle bezeichnet, die vom $Al^{3+}$-Ion mehr oder weniger fest komplex gebunden sind. Durch fortschreitende Kondensationsreaktionen, bei denen Wasser freigesetzt wird, entstehen über Oxidhydrat-Zwischenstufen aus derartigen Hydraten Produkte, deren stöchiometrische Zusammensetzung zunehmend der Formel "$Al_2O_3$" entspricht.

Derartige Kondensationsprozesse laufen bei synthetisch hergestellten anorganischen Sauerstoffverbindungen des Aluminiums häufig schon ab, wenn man aus Lösungen von Aluminumsalzen durch Zugabe von Basen hydratisierte "Aluminiumhydroxide" ausfällt. An derartigen, durch Fällung erzeugten Niederschlägen, aber auch an in der Natur vorkommenden Aluminiumoxid-Hydraten lässt sich der Grad der Kondensation insbesondere durch Erhitzen in der Regel weiter erhöhen. Auf diese Art lässt sich die Stöchiometrie der anorganischen Sauerstoffverbindung des Aluminiums häufig gezielt einstellen. Die Temperatur, die man dabei anwendet, entscheidet in der Regel wesentlich mit darüber, welche Oberflächeneigenschaften das so erhaltene Produkt aufweist. Bei 400°C entsteht beispielsweise aus dem sogenannten γ-Aluminiumhydroxid ein chemisch noch vergleichsweise reaktives γ-Aluminiumoxid. Jedoch ist auch bekannt, dass das Glühen eines solchen γ-Aluminiumoxids oder von Aluminiumoxidhydraten oder Aluminiumhydraten bei 1100°C zu dem chemisch nur noch wenig reaktiven α-Aluminiumoxid führt.

Aus der Gruppe der Aluminiumoxide und Aluminiumoxidhydrate sind als Desaktivatoren natürlich vorkommendes und synthetisches γ-Aluminiumoxid besonders bevorzugt.

Vorzugsweise verwendet man anorganische Sauerstoffverbindungen des Aluminiums, welche wasserhaltig und dadurch besonders wirksam sind als Desaktivatoren. Besonders bevorzugt sind solche derartigen Stoffe, deren Wassergehalt bei 10 bis 40 Prozent liegt, bezogen auf die Trockenmasse der anorganischen Sauerstoffverbindungen des Aluminiums. Ganz besonders bevorzugt sind Aluminiumoxide mit, bezogen auf deren Trockenmasse, einem Wassergehalt von 10 bis 40 Prozent und hoher Oberfläche.

Die benötigte Menge an den erfindungsgemäßen Desaktivatoren für Bortrifluorid richtet sich nach verschiedenen Gesichtspunkten, vor allem:

- der Zahl der Bortrifluorid bindenden reaktiven Stellen auf der Oberfläche des verwendeten Desaktivators und
- dem Grad, bis zu dem der Gehalt an Bortrifluorid im Reaktionsaustrag abgereichert werden soll.

In der Praxis beobachtet man, dass sich der ursprünglich Bortriflourid-freie Desaktivator bei ausreichendem Bortrifluorid-Angebot in Form des Reaktoraustrags bis zu einer Sättigung mit Bortrifluorid belädt. Sein Desaktivierungsvermögen fällt also in der Regel mit anderen Worten effektiv von einem Maximum bis auf Null ab. Danach ist er durch frischen Desaktivator zu ersetzen, oder er muss regeneriert werden. Demgemäß liegt es im Ermessen des Fachmanns,

in welchen Mengen er den erfindungsgemäßen Desaktivator einsetzen möchte.

Um das Volumen des Desaktivators und damit den apparativen Aufwand für die Desaktivierung des Bortrifluorids möglichst klein zu halten, sind solche Desaktivatoren bevorzugt, die eine große - im Sinne der erfindungsgemäßen Desaktivierung - reaktive Oberfläche aufweisen.

Zum Zwecke der Desaktivierung des Bortrifluorids wird der Desaktivator in an sich bekannter Weise mit dem Austrag in Kontakt gebracht.

Der Desaktivator kann dazu in loser Form in den Austrag oder umgekehrt der Austrag, vorzugsweise in einen Überschuss, des losen Desaktivators eingerührt werden. Man verwendet dabei vor allem Vorrichtungen, die ein schnelles und vollständiges Durchmischen gewährleisten.

Vorzugsweise wird der Desaktivator unter wirtschaftlichen Gesichtspunkten in die Form eines Bettes gebracht, und der Austrag wird durch dieses Bett gefahren.

In einer bevorzugten Ausführungsform des erfindungsgemäßen Verfahrens wird hierzu der Desaktivator in einen senkrecht angeordneten Reaktor gefüllt und der Austrag, vorzugsweise von unten, durch das Desaktivator-Bett gefahren.

In einer weiteren bevorzugten Ausführungsform wird das erfindungsgemäße Verfahren kontinuierlich durchgeführt. Insbesondere wird der Desaktivator dabei in zwei parallel angeordneten Absorberkolonnen vorgelegt. Die Absorberkolonnen werden abwechselnd betrieben: Während in der ersten Absorberkolonne die Desaktivierung durchgeführt wird, wird der Desaktivator in der zweiten Absorberkolonne regeneriert, oder die mit Bortrifluorid beladene Absorberkolonne wird mit frischem Desaktivator befüllt.

Die Desaktivierung des Bortrifluorids wird vorzugsweise bei der Temperatur der Polymerisation, vor allem bei 0 bis -30 und insbesondere bei 0 bis -25°C durchgeführt. Eine Desaktivierung bei einer anderen als der Reaktionstemperatur ist möglich; während der dafür erforderlichen Temperaturerhöhung oder -erniedrigung kann sich jedoch in der oben beschriebenen Weise das Reaktionsprodukt in unerwünschter Weise verändern.

Die Kontaktzeit des Austrags mit dem Desaktivator hängt unter anderem ab von der Konzentration des Bortrifluorids im Austrag, dem Gehalt an reaktiven Zentren im Desaktivator und dem Belegungsgrad des Desaktivators mit Bortrifluorid. Normalerweise erfolgt die Desaktivierung bei entsprechend ausreichender Kapazität des Desaktivators unverzüglich. Für den Fall, dass man den Desaktivator in einem senkrechten Bett anordnet und den Austrag durch dieses Bett leitet, lässt sich die erforderliche Fließgeschwindigkeit leicht errechnen und entsprechend einstellen.

Die nach der Desaktivierung verbleibende Phase ("Eluat") enthält das Polyisobuten und weiterhin normalerweise das unumgesetzte Isobuten, niedermolekulare Polymere des Isobutens und gegebenenfalls das bei der Polymerisation des Isobutens eingesetzte Lösungsmittel.

Aus dem Eluat lassen sich geringe Restmengen Bortrifluorid gewünschtenfalls noch durch Extraktion, etwa mit Alkoholen wie Methanol oder vorzugsweise durch Waschen mit Wasser entfernen.

In einer weiteren bevorzugten Ausführungsform des erfindungsgemäßen Verfahrens geht man so vor. dass man die Wirksamkeit des Bortrifluorids in einem ersten Schritt überwiegend in an sich bekannter Weise, d.h. ohne Verwendung einer anorganischen, wasserfreien oder wasserhaltigen Sauerstoffverbindung des Aluminiums, wobei man normalerweise bis auf 0,001 bis 10, vorzugsweise 0,5 bis 8 und insbesondere 1 bis 5 % der ursprünglich eingesetzten Menge des Bortrifluorids desaktiviert und bei Bedarf aus der Reaktionsmischung entfernt, und hebt in einem zweiten Schritt die restliche Wirksamkeit mit einer anorganischen, wasserfreien oder wasserhaltigen Sauerstoffverbindung des Aluminiums auf. Vorzugsweise verwendet man für die erste Stufe der Desaktivierung einen flüssigen Desaktivator wie Wasser, einen Alkohol, ein Amin, Natronlauge oder wäßriges Ammoniak und trennt die dabei normalerweise anfallende flüssige Phase ab. Wegen der durch die Vorbehandlung mit einem sonstigen Desaktivator erzielten geringeren Restmengen an Bortrifluorid werden kleineren Mengen an der anorganischen, wasserfreien oder wasserhaltigen Sauerstoffverbindung des Aluminiums benötigt, so dass deren Preis und der apparative Aufwand bei ihrer Anwendung in ein wirtschaftliches Verhältnis gesetzt werden können gegen die bekannten Nachteile der vorgeschalteten Desaktivierung nach einem der dem Fachmann bereits bekannten Verfahren.

Im weiteren Gang der Aufarbeitung wird die organische Phase zweckmäßigerweise destillativ in nicht umgesetztes Isobuten, gegebenenfalls das Lösungsmittel, die niedermolekularen Polymere des Isobutens und das Wertprodukt Polyisobuten aufgetrennt. Das Isobuten, das Lösungsmittel und die niedermolekularen Polymere können unabhängig voneinander oder zusammen in die Polymerisation zurückgeführt werden. Das gewünschte Polyisobuten zieht man in der Regel als Sumpfprodukt aus der Entgasung ab.

Ein besonderer Vorteil der erfindungsgemäßen Desaktivatoren gegenüber den bekannten Desaktivatoren liegt darin, dass das an erstere gebundene Bortrifluorid unter den Bedingungen der Polyisobuten-Herstellung gegenüber Isobuten keine erkennbare katalytische Aktivität mehr aufweist.

Ein weiterer Vorteil der erfindungsgemäßen Desaktivatoren ist, dass sie normalerweise gut und günstig verfügbar sind. Die Entsorgung des verbrauchten Deaktivators ist daher eine wirtschaftlich vertretbare Alternative.

Weil die Desaktivierung vor allem mit organischen Desaktivatoren zudem in aller Regel bei der Polymerisationstemperatur des Isobutens durchgeführt werden kann, kann die für das Einstellen der niedrigen Temperaturen der

Polymerisation aufgewandte Kälteenergie im Anschluß an die Desaktivierung besonders wirtschaftlich vor der weiteren Aufarbeitung des Reaktoraustrags, beispielsweise über Wärmetauscher, zurückgewonnen werden.

Beispiele

Die mittleren Molekulargewichte ($M_N$) der gemäß den Beispielen hergestellten Polymere wurden mittels Gelpermeationschromatographie bestimmt, wobei Polyisobutene mit definierten bekannten mittleren Molekulargewichten zur Eichung verwendet wurden. Aus den erhaltenen Chromatogrammen wurde das Zahlenmittel $M_N$ nach der Gleichung

$$M_N = \frac{\sum C_i}{\sum \frac{C_i}{M_i}}$$

berechnet, in der $C_i$ für die Konzentration jeweils einer einzelnen Polymerspecies i im erhaltenen Polymergemisch steht und in der $M_i$ das Molekulargewicht dieser einzelnen Polymerspecies i bedeutet. Das Gewichtsmittel $M_W$ wurde aus den erhaltenen Chromatogrammen mit Hilfe der Formel

$$Mw = \frac{\sum C_i M_i}{\sum C_i}$$

erhalten.

Die Dispersität D wurde aus dem Verhältnis von Gewichtsmittel des Molekulargewichts ($M_w$) und Zahlenmittel des Molekulargewichts ($M_N$) nach der Gleichung

$$D = \frac{M_w}{M_N}$$

errechnet.

Der Gehalt an endständigen Vinylidengruppierungen wurde mit Hilfe der $^{13}C$-NMR-Spektroskopie bestimmt, wobei als Lösungsmittel deuteriertes Chloroform und als Standard Tetramethylsilan verwendet wurde.

Beispiel 1: Herstellung von hochreaktivem Polyisobuten

Zur Herstellung eines Polyisobutens wurde gemäß der EP-A 628 575, Beispiel 1, verfahren: Der eingesetzte Isobuten-Feedstock war ein $C_4$-Schnitt folgender Zusammensetzung:

| | |
|---|---|
| Isobutan | 4,0 Gew.-% |
| n-Butan | 9,2 Gew.-% |
| 1-Buten | 29,0 Gew.-% |
| trans-2-Buten | 7,7 Gew.-% |
| cis-2-Buten | 4,5 Gew.-% |
| Isobuten | 45,4 Gew.-% |
| Butadien | <50 ppm |
| Wasser | ca. 2 ppm |

Im Verlauf von einer Stunde wurden 6000 g des obigen $C_4$-Schnittes auf der Saugseite einem Schlaufenreaktors zugeführt, der mit einer integrierten Umwälzpumpe ausgestattet war, dessen Rohrdurchmesser 4 mm und dessen Volumen 1000 ml betrüg. Bezogen auf das Bortrifluorid wurde die 1,6-fache molare Menge 2-Butanol zugesetzt. Der Reaktor wurde so gekühlt, dass die Temperatur im Reaktionsmedium -15°C betrug. Die mittlere Verweilzeit des Reaktionsmediums im Reaktor lag bei 6,6 Minuten. Proben des Reaktorinhalts wurden über eine Entnahmevorrichtung, die 2 cm vor der Zuführung für die Ausgangsstoffe lag, entnommen.

Beispiele 2 bis 5: Desaktivierung und Aufarbeitung

Der Desaktivator wurde in einem verschließbaren, druckstabilen Probenahmeglas vorgelegt. Die Probe von

50 ml wurde innerhalb weniger Sekunden bei -15°C unter intensivem Durchmischen zugefügt und noch 30 Minuten bei dieser Temperatur weitergerührt. Die Mischung wurde in den anschließenden 60 Minuten unter Rühren mittels eines Magnetrührers in dem geschlossenen Probenahmeglas auf +20°C erwärmt. Danach wurde der Desaktivator abgetrennt und die verbliebene organische Phase mit 167 g Wasser gewaschen. Nach dem Abtrennen der wäßrigen Phase wurde das Lösungsmittel abdestilliert, und am Rückstand der Destillation wurden die in Tabelle 1 zusammengestellten analytischen Daten ermittelt.

Es bedeuten in Tabelle 1:

| | |
|---|---|
| $BF_3$ | "Gehalt an $BF_3$ in der Probe": Es wurde die für die Umsetzung des Isobutens zugesetzte $BF_3$-Menge zugrunde gelegt |
| U | Umsatz in Prozent, bezogen auf eingesetztes Isobuten |
| A | Ausbeute an Polyisobuten, bezogen auf eingesetztes Isobuten |
| Vin | Anteil Polyisobuten mit Vinylidendoppelbindungen an der Polyisobuten-Gesamtausbeute |
| $M_N$ | Mittleres Molekulargewicht (ermittelt mittels Gelpermeationschromatographie) |
| D | Dispersität |

Tabelle 1

| Nr. | $BF_3$ [mmol/1] | Desaktivator |  | U [%] | A [%] | Vin [%] | $M_n$ | D | Relative Abreicherung des Gehaltes an anorganischem Fluorid[%] |
|---|---|---|---|---|---|---|---|---|---|
|  |  | Stoff | Menge [g] |  |  |  |  |  |  |
| 2 | 19,8 | Aluminiumoxid I[1)] | 50 | 98 | 95 | 83,4 | 925 | 1,755 | 74 |
| 3 | 19,8 | Aluminiumoxid II[2)] | 50 | 99 | 95 | 84,1 | 982 | 1,682 | 99 |
| 4 | 19,8 | Aluminiumoxid III[3)] | 50 | 99 | 95 | 83,6 | 963 | 1,708 | 98 |
| 5 | 19,8 | - | - | 97 | 93 | 82,2 | 907 | 1,777 | 0 |
| 6 | 19,8 | Wasser | 167 | 99 | 95 | 83,0 | 913 | 1,751 | 98 |

[1)] PROCATALYSE A.A. 2-5 mm, Grade A ($Al_2O_3$-Anteil >93,5 %)
[2)] MERCK AG, Aluminiumoxid 150, 0,063-0,2 mm, basisch, Typ T
[3)] Alumina Woelm B - Super I

Beispiel 7: Kontinuierliche Desaktivierung

Der Austrag aus Beispiel 1 wurde über eine isolierte Verbindungsleitung vom Synthesereaktor mit einer Fließgeschwindigkeit von 2 Liter/h bei -25 bis -5°C kontinuierlich durch eine kühlbare Glaskolonne vom Innenvolumen 100 ml geleitet, die mit 45 g Aluminiumoxid vom Typ PROCATALYSE A.A. 2-5 mm, Grade A ($Al_2O_3$-Anteil >93,5 %) befüllt war. Das Eluat wurde in Fraktionen von jeweils einem Liter gesammelt. Die Analyse ergab folgende Abreichungsresultate bezüglich anorganischem Fluorid in den Eluaten:

Tabelle 2

| Eluat | Relative Abreicherung des Gehaltes an anorganischem Fluorid [%] | Vin [%] | $M_n$ | D |
|---|---|---|---|---|
| 1. Eluat | 72 | | | |
| 2. Eluat | 73 | 87,7 | 898 | 1,77 |
| 3. Eluat | 71 | | | |
| 4. Eluat | 64 | | | |
| 5. Eluat | 63 | 87,1 | 888 | 1,76 |
| 6. Eluat | 46 | | | |
| 7. Eluat | 54 | 87,4 | 903 | 1,73 |
| 8. Eluat | 50 | | | |

Beispiel 8: Konditionieren des gebrauchten Desaktivators

Das gebrauchte Aluminiumoxid aus Beispiel 7 wurde noch in der Glaskolonne mit 500 ml n-Hexan eine Stunde lang bei 20°C gespült. Anschließend wurde noch zwei Stunden lang ein trockener Stickstoffstrom über das so behandelte Aluminiumoxid in der Glaskolonne geleitet. Die anschließende Analyse ergab einen Anteil von 1,4 Gew.-% Kohlenstoff am so erhaltenen Aluminiumoxid.

## Patentansprüche

1. Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators teilweise oder vollständig aufhebt, **dadurch gekennzeichnet, dass** man als festen Desaktivator eine anorganische, wasserfreie oder wasserhaltige Sauerstoffverbindung des Aluminiums verwendet, welche im Reaktionsgemisch unlöslich ist.

2. Verfahren nach Anspruch 1, **dadurch gekennzeichnet, dass** man man die Wirksamkeit des Bortrifluorids in einem ersten Schritt überwiegend in an sich bekannter Weise aufhebt und in einem zweiten Schritt die restliche Wirksamkeit mit einer anorganischen, wasserfreien oder wasserhaltigen Sauerstoffverbindung des Aluminiums aufhebt.

3. Verfahren nach Anspruch 1 oder 2 zur Herstellung von hochreaktivem Polyisobuten mit 75 bis 100 mol-% endständiger Doppelbindungen.

4. Verfahren nach den Ansprüchen 1 bis 3 zur Herstellung von Polyisobuten mit mittleren Molekulargewichten von 300 bis 50000 Dalton.

5. Verfahren nach den Ansprüchen 1 bis 4, **dadurch gekennzeichnet, dass** man als anorganische Sauerstoffverbindung des Aluminiums Stoffe verwendet, die im Wesentlichen die Stöchiometrie "$Al_2O_3$" aufweisen.

6. Verfahren nach den Ansprüchen 1 bis 5, **dadurch gekennzeichnet, dass** man bei der Herstellung des Polyisobutens ein Katalysatorsystem einsetzt, das Bortrifluorid und einen oder mehrere Alkohole umfasst.

7. Verfahren nach Anspruch 6, **dadurch gekennzeichnet, dass** man ein Katalysatorsystem einsetzt, das als Alkohol Methnol oder Isopropanol enthält.

8. Verfahren nach den Ansprüchen 1 bis 7, **dadurch gekennzeichnet, dass** man die katalytische Wirksamkeit des Bortrifluorids mittels des festen Desaktivators kontinuierlich aufhebt.

9. Verfahren nach den Ansprüchen 1 bis 8, **dadurch gekennzeichnet, dass** die anorganische Sauerstoffverbindung des Aluminiums 0 bis 40 Prozent Wasser, bezogen auf ihre Trockenmasse, enthält.

## Claims

1. A process for the preparation of a polyisobutene by cationic polymerization of isobutene or isobutene-containing hydrocarbon streams in the liquid phase in the presence of boron trifluoride acting as catalyst, the catalytic activity of boron trifluoride being partially or completely stopped by means of a solid deactivator following a given timelapse, wherein the solid deactivator used is an inorganic, anhydrous or hydrous oxygen compound of aluminum which is insoluble in the reaction mixture.

2. A process as defined in claim 1, wherein the activity of the boron trifluoride is stopped in a first stage predominantly in known manner, and the residual activity is stopped in a second stage using an inorganic, anhydrous or hydrous oxygen compound of aluminum.

3. A process as defined in claim 1 or 2 for the preparation of a highly reactive polyisobutene containing from 75 to 100 mol% of terminal double bonds.

4. A process as defined in any of claims 1 to 3 for the preparation of a polyisobutene having an average molecular weight of from 300 to 50000 dalton.

5. A process as defined in any of claims 1 to 4, wherein the inorganic oxygen compound of aluminum used comprises a material which substantially exhibits the stoichiometry "$Al_2O_3$".

6. A process as defined in any of claims 1 to 5, wherein a catalyst system containing boron trifluoride and one or more alcohols is used during the production of polyisobutene.

7. A process as defined in claim 6, wherein a catalyst system is used which contains, as alcohol, methanol or isopropanol.

8. A process as defined in any of claims 1 to 7, wherein the catalytic activity of boron trifluoride is continuously stopped by means of the solid deactivator.

9. A process as defined in any of claims 1 to 8, wherein the inorganic oxygen compound of aluminum contains from 0 to 40 percent of water, based on its dry content.

## Revendications

1. Procédé de préparation de polyisobutènes par polymérisation cationique d'isobutène ou de courants d'hydrocarbures contenant de l'isobutène en phase liquide en présence de trifluorure de bore servant de catalyseur, procédé dans lequel on supprime en totalité ou en partie, à l'aide d'un désactivateur solide, l'activité catalytique du trifluorure de bore à un instant voulu, **caractérisé en ce qu'**on utilise en tant que désactivateur solide un composé oxygéné inorganique, anhydre ou contenant de l'eau, de l'aluminium, qui est insoluble dans le mélange réactionnel.

2. Procédé selon la revendication 1, **caractérisé en ce que**, dans une première étape, on supprime d'une manière connue en soi une partie principale de l'activité du trifluorure de bore et, dans une deuxième étape, on supprime le reste de l'activité avec un composé oxygéné inorganique, anhydre ou contenant de l'eau, de l'aluminium.

3. Procédé selon la revendication 1 ou 2, pour préparer un polyisobutène à haute réactivité, comportant de 75 à 100 % en moles de doubles liaisons terminales.

**4.** Procédé selon les revendications 1 à 3 pour préparer un polyisobutène ayant des masses moléculaires moyennes de 300 à 50 000 daltons.

**5.** Procédé selon les revendications 1 à 4, **caractérisé en ce qu'**on utilise en tant que composé oxygéné inorganique de l'aluminium des substances qui pour l'essentiel présentent la stoechiométrie "$Al_2O_3$".

**6.** Procédé selon les revendications 1 à 5, **caractérisé en ce que**, lors de la préparation du polyisobutène, on utilise un système catalyseur qui comprend du trifluorure de bore et un ou plusieurs alcools.

**7.** Procédé selon la revendication 6, **caractérisé en ce qu'**on utilise un système catalyseur qui en tant qu'alcool contient du méthanol ou de l'isopropanol.

**8.** Procédé selon les revendications 1 à 7, **caractérisé en ce qu'**on supprime en continu l'activité catalytique du trifluorure de bore à l'aide du désactivateur solide.

**9.** Procédé selon les revendications 1 à 8, **caractérisé en ce que** le composé oxygéné inorganique de l'aluminium contient de 0 à 40 % d'eau par rapport à la masse sèche.